# EUROPÄISCHE PATENTSCHRIFT

(11) **EP 0 646 705 B1**
(45) Veröffentlichungstag und Bekanntmachung des Hinweises auf die Patenterteilung: **09.06.1999**
(21) Anmeldenummer: 93114230.1
(22) Anmeldetag: 06.09.1993
(51) Int. Cl.: F02C 6/00

(54) **Verfahren zur Erstellung eines Teillastbetriebes bei einer Gasturbogruppe**
Method for providing partial load operation in a gas turbine plant
Procédé pour produire des régimes de fonctionnement partiel dans une installation pour turbine à gaz

(43) Veröffentlichungstag der Anmeldung: 05.04.1995
(73) Patentinhaber: ASEA BROWN BOVERI AG, 5400 Baden (CH)
(72) Erfinder: Althaus, Rolf Dr., CH-9230 Flawil (CH); Chyou, Yau-Pin Dr., CH-5605 Dottikon (CH); Frutschi, Hans Ulrich Dr., CH-5223 Riniken (CH); Genet, Christian, CH-5417 Untersiggenthal (CH); Kamber, Peter, CT-06096 Windsor Lochs (US); Lindvall, Anders, CH-5400 Baden (CH); Rufli, Peter, CH-5442 Fislisbach (CH); Sattelmayer, Thomas, Dr., CH-5318 Mandach (CH); Senior, Peter, Dr., CH-5507 Mellingen (CH)

(56) Entgegenhaltungen:
- CH-A- 218 724
- CH-A- 222 480
- CH-A- 250 742
- US-A- 3 054 257

## Beschreibung

### Technisches Gebiet

Die vorliegende Erfindung betrifft ein Verfahren zur Erstellung eines Teillastbetriebes bei einer Gasturbogruppe gemäss Oberbegriff des Anspruchs 1

### Stand der Technik

Es ist bekanntgeworden, bei reduzierter benötigter Leistung die Teillast bei Gasturbogruppen über eine Brennstoffreguliereung zu bewerkstelligen, indem durch Verminderung der Brennstoffzuführung, aber bei konstant bleibendem Luftstrom, die Turbinen-Eintrittstemperatur abgesenkt wird. Diese an sich einfache Erstellung eines Teillastbetriebes erweist sich hinsichtlich Wirkungsgrades als zu wenig attraktiv, sinkt doch der Wirkungsgrad beinahe direkt proportional zur Leistungsreduktion ab.

Im Bestreben diese relativ hohe Wirkungsgradeinbusse in engeren Grenzen zu halten, ist schon vorgeschlagen worden, die Leistungsabsenkung zusätzlich über eine Verstellung der Verdichter-Leitschaufeln vorzunehmen. Bei dieser Regelung erfährt der thermische Wirkungsgrad eine kleinere Einbusse, dies in der Grössenordnung von bis zu 2 Prozentpunkten, indessen kann mit einer solchen Regelung der Massendurchsatz und damit die Leistung nur bis ca. 80% abgesenkt werden. Die Grenze des so praktizierten Regelbereiches, d.h. von 100% auf 80%, ist durch den starken Anstieg der Turbinen-Austrittstemperatur begrenzt, welche die Folge des bei möglichst konstant hoher Turbinen-Eintrittstemperatur sinkenden Druckverhältnisses ist.

Bei einer Gasturbogruppe, bei welcher stromab der Verdichtergruppe eine Hochdruck-Brennkammer operiert, in welcher die Heissgase zur Beaufschlagung einer Hochdruckturbine bereitgestellt werden, wobei diese Abgase, welche sich durch eine hohe Temperatur ausweisen, anschliessend eine sogenannte Niederdruck-Brennkammer durchströmen, bevor sie dann eine Niederdruckturbine beaufschlagen, sind die Anforderungen zur Erstellung eines Teillastbetriebes neu zu definieren, insbesondere dann, wenn die Niederdruck-Brennkammer auf Selbstzündung ausgelegt ist.

Ein Hinunterfahren liesse sich zwar durch Schliessen der Vorleitreihe, falls eine solche Möglichkeit überhaupt vorgegeben ist, bewerkstelligen; dies würde aber unweigerlich ein Hinunterfahren der Brennstoffmenge in den beiden Brennkammern der Gasturbogruppe bedingen. Ist die Niederdruck-Brennkammer auf Selbstzündung ausgelegt, so können die Brennstoffmengen nicht gleichzeitig weiter reduziert werden, denn dann liesse sich die Temperatur der Abgase aus der Hochdruckturbine für eine nachfolgende Selbstzündung in der Niederdruck-Brennkammmer nicht mehr aufrechterhalten.

Die Druckschrift US-3,054,257 offenbart eine Gasturbogruppe, welche im wesentlichen aus einer Verdichtereinheit, einer sequentieller Verbrennung mit jeweiliger Beaufschlagung einer unmittelbar stromab jeder Brennkammer angeordneten Turbine. Diese Gasturbogruppe weist dabei eine rekuperative Schaltung auf, welche darin besteht, dass der eine Wärmetauscher stromauf der zweiten Brennkammmer operiert. Diese Schaltung ist des weiteren so charakterisiert, dass die Strömungsmaschinen keine unmittelbare drehspezifische Interdependenz zueinander aufweisen, so dass deren Abstimmung bei jedem Lastwechsel höchst kompliziert ausfallen muss. Dies ist zum Beispiel immer dann der Fall, wenn bei einer Ausserbetriebssetzung der zweiten Brennkammer, um auf Teillastbetrieb zu gehen, der hier stromauf angeordnete Wärmetauscher unweigerlich als Wärmesenke wirkt, so dass die Aufrechterhaltung des kalorischen Potentials aus der ersten Turbine für die zweite Turbine nicht mehr gewährleistet werden kann. Diese fehlende drehspezifische Interdependenz zwischen den einzelnen Strömungsmaschinen macht sich auch dort negativ bemerkbar, wenn aufgrund von regelungsspezifischen Massnahmen für die zweite Turbine auf die Verdichtereinheit eingewirkt wird.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art eine Regelmethode vorzuschlagen, welche durch ein einfaches Regelkonzept einen Teillastbetrieb bis zu ca. 40% ermöglicht, unter Berücksichtigung, dass die Niederdruck-Brennkammer auf Selbstzündung ausgelegt ist.

Die wesentlichen Vorteile der Erfindung sind darin zu sehen, dass die ganze Leistungsabsenkung auch ohne Inanspruchnahme der Verstellung von Schaufeln im Bereich der Verdichtereinheit bei maximiertem Teillastwirkungsgrad abläuft.

Bis zur Einleitung der Leistungsabsenkung herrscht in der zweiten Brennkammer (Niederdruck-Brennkammer) eine Temperaturreserve vor, welche eine sichere Selbstzündung ermöglicht. Sobald hier die Brennstoffmenge reduziert wird, sinkt die Leistung der Gasturbogruppe im gewollten Rahmen ab, ohne nennenswerte Verschiebungen der Maschinenbetriebspunkte.

Der Wirkungsgrad der Gasturbogruppe bleibt bei Teillast so lange annähernd unverändert, als die Brennstoffmenge für die erste Brennkammer (Hochdruck-Brennkammer) konstant gehalten wird.

Sieht die Verdichtereinheit eine Verstellmöglichkeit der Schaufeln vor, so kann die Verstellung anschliessend zur weiteren Absenkung der Leistung herangezogen werden, dies in Wirkverbindung mit der Brennstoffmengen-Zuführung in die erste Brennkammer. Selbstverständlich kann diese Verstellung auch vorgängig einer Brennstoff-Regulierung eingeleitet werden.

Die Wirkverbindung zwischen Verstellmöglichkeit der Schaufeln in der Verdichtereinheit und Regulierung der Brennstoffmenge in der ersten Brennkammer ergeben vorteilhafte Regelmethoden für den Teillastbetrieb, beispielsweise:

Bei offener Vorleitreihe wird zuerst die Brennstoff-Zuführung in die zweite Brennkammer reduziert, dies bis ca. Teillast von 50% erreicht ist. In diesem Bereich löscht die Flamme in dieser Brennkammer. Von der ersten Turbine strömen die Abgase ohne weitere kalorische Aufbereitung in die zweite Turbine und beaufschlagen diese.
In einem weiteren Schritt erfolgt eine Verstellung der Vorleitreihe, dergestalt, dass zunächst keine Absenkung der Temperatur in der ersten Brennkammer stattfindet. Sodann erfolgt ein sukzessives Schliessen der Vorleitreihe bis ca. 75% der vorgängig gefahrenen Leistung, wobei die Brennstoffmenge in der ersten Brennkammer, da weniger Luft strömt, zurückgenommen wird, dies indessen nur in dem Rahmen, als die Aufrechterhaltung der Temperatur vor der ersten Turbine gewährleistet ist. Anschliessend greift eine Temperatur-Absenkung innerhalb der ersten Brennkammer ein.
Die Verstellung der Vorleitreihe kann indessen, wie bereits erwähnt, zuerst zur Einleitung gelangen, bevor die Brennstoff-Zuführung in die zweite Brennkammer geregelt wird.

Ein weiterer Vorteil der Erfindung ist darin zu sehen, dass hier eine integrative Möglichkeit besteht, wonach die Absenkung der Leistung nach einem Kaskadenprinzip geregelt werden kann.

Anschliessend an die Verstellung der Leitschaufeln des Verdichters kann durch Vorwärmung der Ansaugluft zum Verdichter mit Hilfe von Entnahmedampf eines beispielsweise nachgeschalteten Dampfkreislaufes einer Kombianlage die Leistung weiter mit hohem Wirkungsgrad abgesenkt werden.

Vorteilhafte und zweckmässige Weiterbildungen der erfindungsgemässen Aufgabenstellung sind in den weiteren abhängigen Ansprüchen gekennzeichnet.

Im folgenden werden anhand der Zeichnungen Ausführungsbeispiele der Erfindung näher erläutert.
Alle für das unmittelbare Verständnis der Erfindung unwesentlichen Merkmale sind fortgelassen. In den verschiedenen Figuren sind gleiche Elemente mit den gleichen Bezugszeichen versehen. Die Strömungsrichtung der Medien ist mit Pfeilen angegeben.

### Kurze Beschreibung der Zeichnungen

Es zeigt:
- Fig. 1: eine Gasturbine mit verschiedenen Strömungsmaschinen und Brennkammern,
- Fig. 2: eine Schaltung nach Fig. 1, wobei die Verdichtereinheit mit einem Zwischenkühler ergänzt ist und
- Fig.3: eine Regelmethode für den Teillastbetrieb einer obengenannten Schaltung anhand eines qualitativen Diagrammes.

### Wege zur Ausführung der Erfindung, gewerbliche Verwertbarkeit

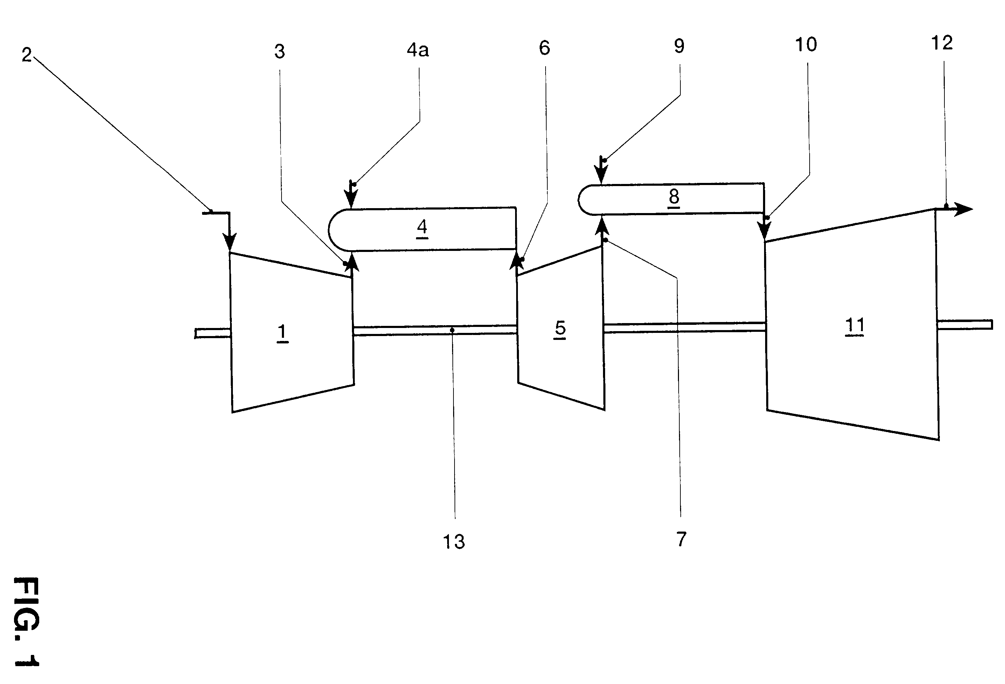

Fig. 1 zeigt eine Gasturbine, welche weiter unten Grundlage für die zur Anwendung gelangende Regelmethode bildet. Die Gasturbine weist eine Verdichtereinheit 1 auf, in welcher die Kompression der angesaugten Luft 2 stattfindet. Die verdichtete Luft 3 strömt sodann in eine erste Brennkammer (Hochdruck-Brennkammer = HD-Brennkammer) 4, in welcher die Bereitstellung der ersten Heissgaserzeugung anhand eines Brennstoffes 4a stattfindet. Stromab dieser HD-Brennkammer 4 operiert eine erste Turbine (Hochdruck-Turbine = HD-Turbine) 5, in welcher die Heissgase 6 eine Teilentspannung erfahren. Diese Teilentspannung ist dadurch charakterisiert, dass die Abgase 7 aus der HD-Turbine 5 noch eine relativ hohe Temperatur aufweisen, dies in der Grössenordnung von 1000 Grad C und mehr, dementsprechend besteht diese HD-Turbine 5 aus wenigen Laufschaufelstufen, vorzugsweise 1 bis 3 Stufen. Stromab der HD-Turbine 5 wirkt eine zweite Brennkammer (Niederdruck-Brennkammer = ND-Brennkammer) 8, welche nach einem Selbstzündungsprinzip funktioniert. Diese ND-Brennkammer 8 hat im wesentlichen die Form eines durchströmten Ringkanals, in welchem vorzugsweise ein gasförmiger Brennstoff 9 eingedüst wird. Bei einer Temperatur der Abgase 7 aus der HD-Turbine 5 im obengenannten Temperaturniveau findet eine Selbstzündung des eingedüsten gasförmigen Brennstoffes 9 statt. Diese ND-Brennkammer 8 weist des weiteren nicht dargestellte Strömungshilfen auf, welche im Bereich der Flammenfront eine Rückströmzone zu bilden vermögen, dies zur Gewährleistung eines sicheren Brennbetriebes. Die Abgase 7 werden in der ND-Brennkammer 8 wieder zu Heissgasen 10 aufbereitet, deren Temperatur in etwa derjenigen in der HD-Brennkammer 4 entspricht. Grundsätzlich weisen die Temperaturen der Heissgase 6, 10 keine unmittelbare brennkammerbedingte Grenze auf; diese Grenze wird vielmehr und zunächst von der zu beaufschlagenden Turbine und deren Maschinenelementen aufdiktiert. Die Heissgase 10 beaufschlagen eine zweite Turbine (Niederdruck-Turbine = ND-Turbine) 11, in welcher die endgültige Entspannung stattfindet. Das kalorische Remanenzpotential der Abgase 12 kann beispielsweise zur Dampferzeugung eines nachgeschalteten Dampfkreislaufes eingesetzt werden. Ein wesentliches Merkmal der gezeigten Gasturbine ist die einheitliche Lagerung aller Strömungsmaschinen auf einer Welle 13, welche vorzugsweise auf zwei nicht gezeigten Lagern gelagert ist. Die beiden Brennkammern 4, 8 nehmen den intermediären Raum ein, wobei die HD-Brennkammer 4, welche vorzugsweise als Ringbrennkammer ausgebildet ist, weitgehend der Verdichtereinheit 1 übergelagert werden kann, dergestalt, dass eine kompakte Einheit daraus resultiert. Diese Möglichkeit lässt sich aus strömungstechnischen Ueberlegungen bezüglich der ND-Brennkammer 8 nicht anwenden; immerhin ist zu sagen, dass die letztgenannte Brennkammer sehr kurz ist, so dass die ganze Gasturbine in allen Ebenen eine kompakte Einheit bildet.

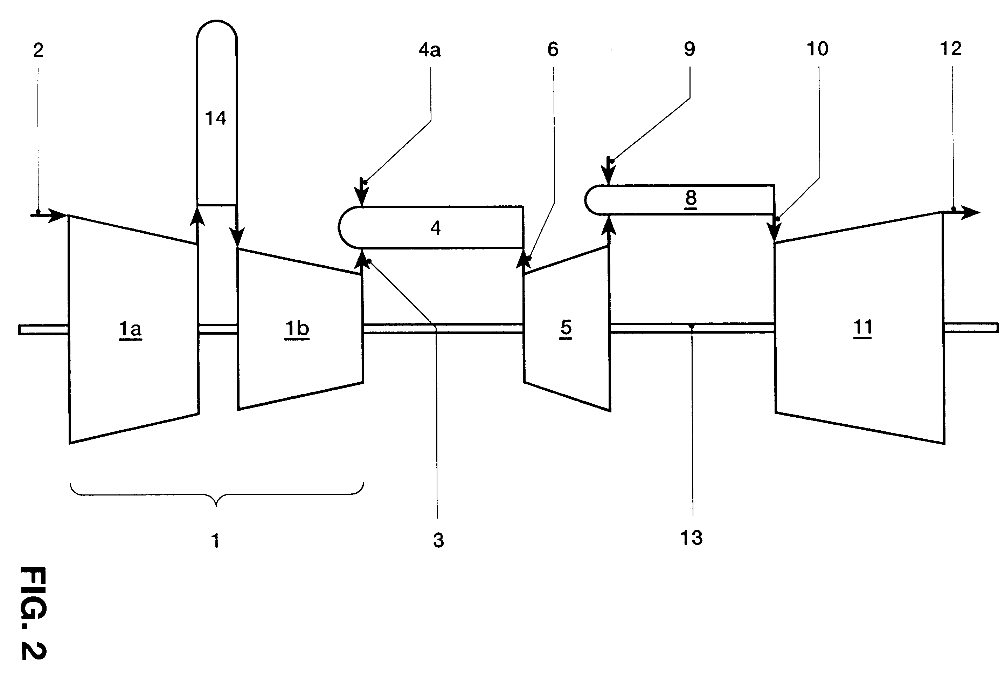

Fig. 2 unterscheidet sich von Fig. 1 insoweist, als hier die Verdichtung der angesaugten Luft 2 in zwei Stufen geschieht, wobei zwischen ND-Verdichter 1a und HD-Verdichter 1b eine Zwischenkühler-Einheit 14 eingeschaltet ist, dies bei Bedarf zur Steigerung der spezifischen Leistung der Gasturbine.

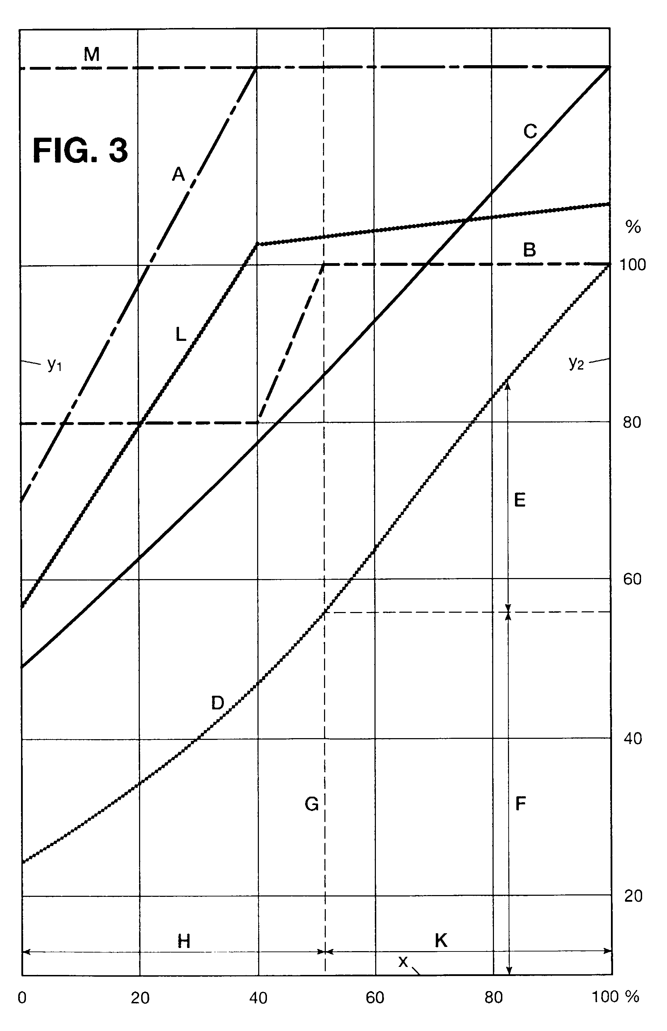

Der Verlauf der wichtigsten Temperaturen und des prozentualen Brennstoffverbrauches sind in Fig. 3 dargestellt. Die Regelmethode betrifft eine Schaltung, welche ohne Verdichter-Luftvorwärmung bei Teillast operiert. Ausserdem wird die Temperatur vor der HD-Turbine bereits während des Schliessvorganges der Verdichterleitreihe abgesenkt.

Darin bedeuten:
- X: Last in %
- Y1: Temperatur qualitativ
- Y2: Brennstoffmenge in %
- A: Eintrittstemperatur HD-Turbine
- B: Winkel Vorleitreihe
- C: Eintrittstemperatur ND-Turbine
- D: Totale Brennstoffmenge
- E: Brennstoffmenge der ND-Brennkammer
- F: Brennstoffmenge der HD-Brennkammer
- G: Uebergang zum Betrieb mit Zwischenerhitzung
- H: Alleiniger Betrieb der HD-Brennkammer
- K: Betrieb beider Brennkammern
- L: Austrittstemperatur der HD-Turbine, wobei die leichte Absenkung aus dem Turbinenschluckgesetz der ND-Turbine herrührt. Die Diskrepanz der beiden Temperaturen L und C, insbesondere im Abschnitt H, ist durch die Kühlluft bedingt.
- M: Zeigt eine Regelmethode, bei welcher die Last auf Null abgesenkt werden kann, indem die Verdichterluft abgeblasen wird.

Der Umstand, dass von Leerlauf bis etwa Halblast (Abszisse X) nur mit der HD-Brennkammer gefahren wird, prägt die Temperaturverläufe nachhaltig. Es ist ersichtlich, dass bei der Inbetriebnahme der ND-Brennkammer bereits praktisch die nominelle Zündtemperatur (Selbstzündung) vorliegt. Daraus ist gewährleistet, dass sich für die Brenner in der ND-Brennkammer keine Stabilitätsprobleme im transienten Bereich einstellen. Obwohl der Leerlaufverbrauch etwa bei einem Viertel der Vollast-Brennstoffmenge liegt, sind dies bereits etwa 40% der Brennstoffmenge der HD-Brennkammer.

Die Imbetriebnahme der Gasturbogruppe gestaltet sich als Reziprok zu der beschriebenen Regelmethode.

### Weitere Bezeichnungsliste

- 1: Verdichtereinheit
- 1a: ND-Verdichter
- 1b: HD-Verdichter
- 2: Angesaugte Luft
- 3: Verdichtete Luft
- 4: HD-Brennkammer
- 4a: Brennstoff
- 5: HD-Turbine
- 6: Heissgase
- 7: Abgase
- 8: ND-Brennkammer
- 9: Gasförmiger Brennstoff
- 10: Heissgase
- 11: ND-Turbine
- 12: Abgase
- 13: Welle
- 14: Zwischenkühler-Einheit

## Patentansprüche

1. Verfahren zur Erstellung eines Teillastbetriebes bei einer Gasturbogruppe, im wesentlichen bestehend aus einer Verdichtereinheit, aus einer ersten der Verdichtereinheit nachgeschalteten Brennkammer, einer der ersten Brennkammer nachgeschalteten ersten Turbine, einer dieser ersten Turbine nachgeschalteten zweiten Brennkammer, deren Heissgase eine zweite Turbine beaufschlagen, wobei während der Absenkung der Brennstoffmenge in der zweiten Brennkammer die Brennstoffmenge in der ersten Brennkammer annähernd konstant bleibt, dadurch gekennzeichnet, dass alle Strömungsmaschinen (1, 5, 11) der Gasturbogruppe über eine einheitliche Lagerung auf einer Welle betrieben werden.

2. Verfahren nach Anspruch 1, dadurch gekennzeichnet, dass der Teillastbetrieb mit gelöschter zweiter Brennkammer (8) gefahren wird.

3. Verfahren nach den Ansprüchen 1 und 2, dadurch gekennzeichnet, dass eine weitere Absenkung der Leistung unterhalb des allein durch die erste Brennkammer (4) induzierten Teillastbetriebes durch eine Verstellung der Schaufeln der Verdichtereinheit (1, 1a, 1b) vorgenommen wird.

4. Verfahren nach Anspruch 3, dadurch gekennzeichnet, dass die Brennstoffmenge (4a) in der ersten Brennkammer (4) dergestalt reduziert wird, dass die Temperatur am Eintritt in die erste Turbine (5) konstant bleibt.

5. Verfahren nach Anspruch 3, dadurch gekennzeichnet, dass die Verstellung der Schaufeln die Leitschaufeln, mindestens aber eine Vorleitreihe betrifft.

6. Verfahren nach den Ansprüchen 1-5, dadurch gekennzeichnet, dass für die restliche Reduktion der Leistung bis Leerlauf die Brennstoffmenge (4a) der ersten Brennkammer (4) reduziert wird.

7. Verfahren nach Anspruch 1, dadurch gekennzeichnet, dass die Verdichtereinheit aus einem ND-Verdichter (1a) und einem HD-Verdichter (1b) besteht, dass stromab des ND-Verdichters (1a) und stromauf des HD-Verdichters (1b) die Luft einen Zwischenkühler (14) durchströmt.

8. Verfahren nach den Ansprüchen 1-3, dadurch gekennzeichnet, dass die Lastreduktion durch eine Vorwärmung der Verdichter-Eintrittsluft (2) vorgenommen wird.

9. Verfahren nach Anspruch 8, dadurch gekennzeichnet, dass die Vorwärmung der Verdichter-Eintrittsluft (2) durch eine Dampfmenge vorgenommen wird.

10. Verfahren nach Anspruch 9, dadurch gekennzeichnet, dass die Dampfmenge einem Dampfkreislauf entnommen wird.

## Claims

1. Method of establishing part-load operation in a gas turbine group, consisting essentially of a compressor unit, of a first combustion chamber downstream of the compressor unit, of a first turbine downstream of the first combustion chamber, of a second combustion chamber connected downstream of the first turbine, the hot gases of the second combustion chamber being admitted to a second turbine, the fuel quantity in the first combustion chamber remaining approximately constant during the reduction of the fuel quantity in the second combustion chamber, characterized in that all of the turbomachines (1, 5, 11) of the gas turbine group are operated while supported on the same shaft.

2. Method according to Claim 1, characterized in that the part-load operation is operated with the second combustion chamber (8) extinguished.

3. Method according to Claims 1 and 2, characterized in that a further reduction in the power below the part-load operation induced by the first combustion chamber (4) alone is undertaken by an adjustment of the blading of the compressor unit (1, 1a, 1b).

4. Method according to Claim 3, characterized in that the fuel quantity (4a) in the first combustion chamber (4) is reduced in such a way that the temperature at the inlet to the first turbine (5) remains constant.

5. Method according to Claim 3, characterized in that the adjustment of the blading applies to the guide vanes, at least however, one inlet guide vane row.

6. Method according to Claims 1-5, characterized in that the fuel quantity (4a) of the first combustion chamber (4) is reduced for the residual reduction of the power down to idle.

7. Method according to Claim 1, characterized in that the compressor unit consists of an LP compressor (1a) and an HP compressor (1b) and in that the air flows through an intercooler (14) downstream of the LP compressor (1a) and upstream of the HP compressor (1b).

8. Method according to Claims 1-3, characterized in that the load reduction is undertaken by preheating the compressor inlet air (2).

9. Method according to Claim 8, characterized in that the preheating of the compressor inlet air (2) is undertaken by means of a quantity of steam.

10. Method according to Claim 9, characterized in that the quantity of steam is taken from a steam cycle.

## Revendications

1. Procédé pour l'établissement d'un régime de fonctionnement à charge partielle dans un groupe de turbine à gaz, se composant essentiellement d'une unité de compresseur, d'une première chambre de combustion installée après l'unité de compresseur, d'une première turbine installée après la première chambre de combustion, d'une seconde chambre de combustion installée après cette première turbine et dont les gaz chauds alimentent une seconde turbine, le débit de combustible dans la première chambre de combustion restant approximativement constant pendant la diminution du débit de combustible dans la seconde chambre de combustion, caractérisé en ce que toutes les turbomachines (1, 5, 11) du groupe de turbine à gaz fonctionnent sur un arbre par l'intermédiaire d'un appui unitaire.

2. Procédé suivant la revendication 1, caractérisé en ce que le régime de fonctionnement à charge partielle est conduit avec la seconde chambre de combustion (8) éteinte.

3. Procédé suivant les revendications 1 et 2, caractérisé en ce que l'on effectue une réduction supplémentaire de la puissance en dessous du régime de fonctionnement à charge partielle assuré uniquement par la première chambre de combustion (4) en réglant les aubes de l'unité de compresseur (1, 1a, 1b).

4. Procédé suivant la revendication 3, caractérisé en ce que l'on réduit le débit de combustible (4a) dans la première chambre de combustion (4) d'une façon telle que la température à l'entrée de la première turbine (5) reste constante.

5. Procédé suivant la revendication 3, caractérisé en ce que le réglage des aubes concerne les aubes directrices, mais au moins une rangée pré-directrice.

6. Procédé suivant les revendications 1 - 5, caractérisé en ce que, pour le reste de la réduction de la puissance jusqu'au ralenti, on réduit le débit de combustible (4a) de la première chambre de combustion (4).

7. Procédé suivant la revendication 1, caractérisé en ce que l'unité de compresseur se compose d'un compresseur BP (1a) et d'un compresseur HP (1b), et en ce que l'air traverse un refroidisseur intermédiaire (14) en aval du compresseur BP (1a) et en amont du compresseur HP (1b).

8. Procédé suivant les revendications 1 - 3, caractérisé en ce que l'on effectue la réduction de la charge en préchauffant l'air d'entrée (2) du compresseur.

9. Procédé suivant la revendication 8, caractérisé en ce que l'on effectue le préchauffage de l'air d'entrée (2) du compresseur au moyen d'un débit de vapeur.

10. Procédé suivant la revendication 9, caractérisé en ce que le débit de vapeur est prélevé dans un circuit de vapeur.
